# EUROPEAN PATENT SPECIFICATION

(11) **EP 4 152 192 B1**
(45) Date of publication and mention of the grant of the patent: **11.11.2026**
(21) Application number: 22193866.5
(22) Date of filing: 05.09.2022
(51) Int. Cl.: G06F 21/55, H04L 9/40

(54) **ON-CHASSIS BACKPLANE INTRUSION DETECTION SYSTEM AND CONTINUOUS THREAT DETECTION ENABLEMENT PLATFORM**
BORD-RÜCKWANDPLATINENEINDRINGDETEKTIONSSYSTEM UND PLATTFORM ZUR ERMÖGLICHUNG VON KONTINUIERLICHER GEFAHRENERKENNUNG
SYSTÈME DE DÉTECTION D'INTRUSION DE FOND DE PANIER SUR CHÂSSIS ET PLATEFORME D'ACTIVATION DE DÉTECTION DES MENACES CONTINU

(30) Priority: 16.09.2021 US 202163244891 P; 02.11.2021 US 202117517179
(43) Date of publication of application: 22.03.2023
(73) Proprietor: Rockwell Automation Technologies, Inc., Mayfield Heights, OH 44124 (US)
(72) Inventor: Wylie, Dennis M., Mayfield Heights (US); Hamilton, Noah Andrew, Mayfield Heights (US)
(74) Representative: Grünecker Patent- und Rechtsanwälte PartG mbB

(56) References cited:
- US-A1- 2013 031 037
- MORTENSON TED: "WHAT IS REMOTE I/O?", 13 April 2020 (2020-04-13), XP093013866, Retrieved from the Internet <URL:https://realpars.com/remote-io/> [retrieved on 20230113]

## Description

### BACKGROUND

The subject matter disclosed herein relates generally to industrial automation systems, and, more particularly, to detection and notification of security threats or intrusion in an industrial environment.
US 2013/031037 A1 discloses a system and methodology providing automation security analysis and network intrusion protection in an industrial environment. A security analysis tool connected to a controller of controlled devices receives abstract factory models or descriptions for input and generates an output. Validation tools are operative in an automation security network, wherein the tools perform security checking and/or auditing functions, for example, to determine if security components are in place and/or in suitable working order.
The publication of Ted Mortenson titled "What is remote I/O?", dated 13. April, 2020 relates to remote I/O. In this article, the terms I/O, local I/O, and remote I/O, are explained and it is discussed why remote PLC I/O is used in industrial applications.

### BRIEF DESCRIPTION

The invention is what is claimed in the independent claims.
Preferred embodiments are specified in the dependent claims.

The following presents a simplified summary in order to provide a basic understanding of some aspects described herein. This summary is not an extensive overview nor is intended to identify key/critical elements or to delineate the scope of the various aspects described herein. Its sole purpose is to present some concepts in a simplified form as a prelude to the more detailed description that is presented later.

In one or more embodiments, a security module is provided, comprising a backplane interface component configured to interface the security module with a backplane of an industrial controller; and a security component configured to perform security monitoring of data traffic on the backplane and to generate a notification in response to detecting, based on the security monitoring, that a characteristic of the data traffic is indicative of a security intrusion.

Also, one or more embodiments, provide a method, comprising interfacing, by a security module comprising a processor, with a backplane of an industrial controller; performing, by the security module, security monitoring of data traffic across the backplane; and in response to determining, based on the security monitoring, that a characteristic of the data traffic is indicative of a security threat, generating, by the security module, a notification directed to one or more client devices.

Also, according to one or more embodiments, a non-transitory computer-readable medium is provided having stored thereon instructions that, in response to execution, cause a security module comprising a processor to perform operations, the operations comprising communicatively interfacing the security with a backplane of an industrial controller; performing security monitoring of data traffic across the backplane; and in response to determining, based on the security monitoring, that a characteristic of the data traffic is indicative of a security issue, generating a notification directed to one or more client devices.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 is a diagram of an example industrial control environment.
FIG. 2 is a diagram illustrating an architecture of I/O devices that are electrically connected to an industrial controller.
FIG. 3 is a diagram illustrating communication between a processor module and an I/O module within an industrial controller chassis.
FIG. 4 is a block diagram of an example security module.
FIG. 5 is a diagram of an example industrial controller in which a security module has been installed.
FIG. 6 is a diagram illustrating passive monitoring of backplane data traffic by a security module's security component.
FIG. 7 is a diagram illustrating active security monitoring performed by a security module's security component.
FIG. 8 is a diagram depicting an example architecture in which security notifications are generated and delivered by a security module.
FIG. 9 is a flowchart of an example methodology for performing passive security monitoring of data traffic on the backplane of an industrial controller in view of user-defined security rules or parameters.
FIG. 10 is a flowchart of an example methodology for performing passive security monitoring of data traffic on the backplane of an industrial controller based on learned patterns of backplane data traffic.
FIG. 11 is a flowchart of an example methodology for performing active security monitoring of devices connected to the backplane of an industrial controller.
FIG. 12 is an example computing environment.
FIG. 13 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (e.g., screwed or bolted) or removable affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers. Also, components as described herein can execute from various computer readable storage media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; e.g., the set with no elements therein. Thus, a "set" in the subject disclosure includes one or more elements or entities. As an illustration, a set of controllers includes one or more controllers; a set of data resources includes one or more data resources; etc. Likewise, the term "group" as utilized herein refers to a collection of one or more entities; e.g., a group of nodes refers to one or more nodes.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches also can be used.

Industrial controllers, their associated I/O devices, motor drives, and other such industrial devices are central to the operation of modern automation systems. Industrial controllers interact with field devices on the plant floor to control automated processes relating to such objectives as product manufacture, material handling, batch processing, supervisory control, and other such applications. Industrial controllers store and execute user-defined control programs to effect decision-making in connection with the controlled process. Such programs can include, but are not limited to, ladder logic, sequential function charts, function block diagrams, structured text, or other such platforms.

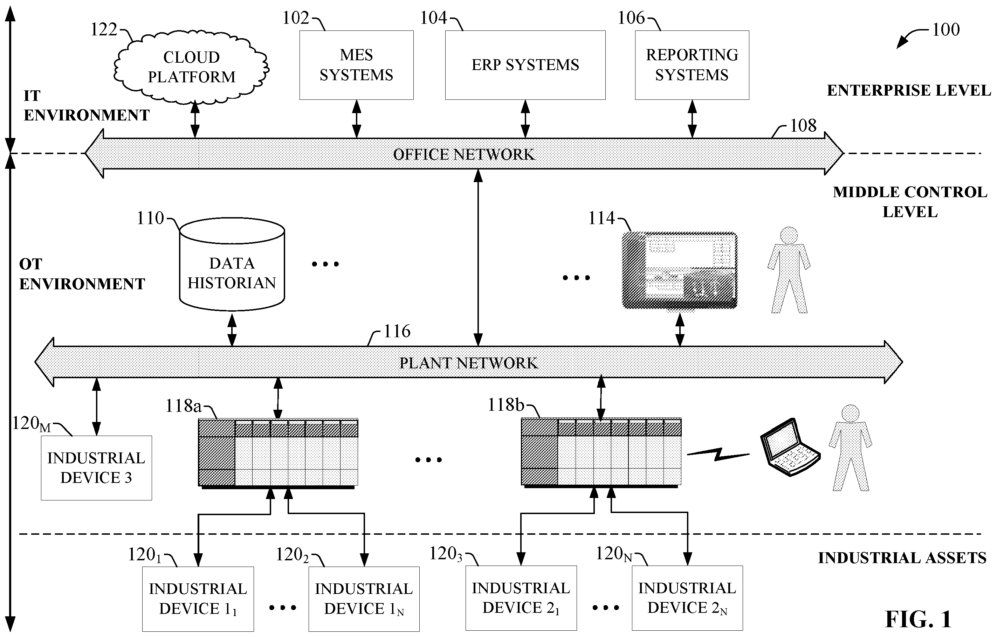

FIG. 1 is a block diagram of an example industrial environment 100. In this example, a number of industrial controllers 118 are deployed throughout an industrial plant environment to monitor and control respective industrial systems or processes relating to product manufacture, machining, motion control, batch processing, material handling, or other such industrial functions. Industrial controllers 118 typically execute respective control programs to facilitate monitoring and control of industrial devices 120 making up the controlled industrial assets or systems (e.g., industrial machines). One or more industrial controllers 118 may also comprise a soft controller executed on a personal computer, on a server blade, or other hardware platform, or on a cloud platform. Some hybrid devices may also combine controller functionality with other functions (e.g., visualization). The control programs executed by industrial controllers 118 can comprise any conceivable type of code used to process input signals read from the industrial devices 120 and to control output signals generated by the industrial controllers, including but not limited to ladder logic, sequential function charts, function block diagrams, structured text, C++, Python, Javascript, etc.

Industrial devices 120 may include input devices that provide data relating to the controlled industrial systems to the industrial controllers 118, output devices that respond to control signals generated by the industrial controllers 118 to control aspects of the industrial systems, or devices that act as both input and output devices. Example input devices can include telemetry devices (e.g., temperature sensors, flow meters, level sensors, pressure sensors, etc.), manual operator control devices (e.g., push buttons, selector switches, etc.), safety monitoring devices (e.g., safety mats, safety pull cords, light curtains, etc.), and other such devices. Output devices may include motor drives, pneumatic actuators, signaling devices, robot control inputs, valves, and the like. Some industrial devices, such as industrial device 120M, may operate autonomously on the plant network 116 without being controlled by an industrial controller 118.

Industrial controllers 118 may communicatively interface with industrial devices 120 over hardwired connections or over wired or wireless networks. For example, industrial controllers 118 can be equipped with native hardwired inputs and outputs that communicate with the industrial devices 120 to effect control of the devices. The native controller I/O can include digital I/O that transmits and receives discrete voltage signals to and from the field devices, or analog I/O that transmits and receives analog voltage or current signals to and from the devices. The controller I/O can communicate with a controller's processor over a backplane such that the digital and analog signals can be read into and controlled by the control programs. Industrial controllers 118 can also communicate with industrial devices 120 over the plant network 116 using, for example, a communication module or an integrated networking port. Exemplary networks can include the Internet, intranets, Ethernet, EtherNet/IP, DeviceNet, ControlNet, Data Highway and Data Highway Plus (DH/DH+), Remote I/O, Fieldbus, Modbus, Profibus, wireless networks, serial protocols, and the like. The industrial controllers 118 can also store persisted data values that can be referenced by the control program and used for control decisions, including but not limited to measured or calculated values representing operational states of a controlled machine or process (e.g., tank levels, positions, alarms, etc.) or captured time series data that is collected during operation of the automation system (e.g., status information for multiple points in time, diagnostic occurrences, etc.). Similarly, some intelligent devices - including but not limited to motor drives, instruments, or condition monitoring modules - may store data values that are used for control and/or to visualize states of operation. Such devices may also capture time-series data or events on a log for later retrieval and viewing.

Industrial automation systems often include one or more human-machine interfaces (HMIs) 114 that allow plant personnel to view telemetry and status data associated with the automation systems, and to control some aspects of system operation. HMIs 114 may communicate with one or more of the industrial controllers 118 over a plant network 116, and exchange data with the industrial controllers to facilitate visualization of information relating to the controlled industrial processes on one or more pre-developed operator interface screens. HMIs 114 can also be configured to allow operators to submit data to specified data tags or memory addresses of the industrial controllers 118, thereby providing a means for operators to issue commands to the controlled systems (e.g., cycle start commands, device actuation commands, etc.), to modify setpoint values, etc. HMIs 114 can generate one or more display screens through which the operator interacts with the industrial controllers 118, and thereby with the controlled processes and/or systems. Example display screens can visualize present states of industrial systems or their associated devices using graphical representations of the processes that display metered or calculated values, employ color or position animations based on state, render alarm notifications, or employ other such techniques for presenting relevant data to the operator. Data presented in this manner is read from industrial controllers 118 by HMIs 114 and presented on one or more of the display screens according to display formats chosen by the HMI developer. HMIs may comprise fixed location or mobile devices with either user-installed or pre-installed operating systems, and either user-installed or pre-installed graphical application software.

Some industrial environments may also include other systems or devices relating to specific aspects of the controlled industrial systems. These may include, for example, one or more data historians 110 that aggregate and store production information collected from the industrial controllers 118 and other industrial devices.

Industrial devices 120, industrial controllers 118, HMIs 114, associated controlled industrial assets, and other plant-floor systems such as data historians 110, vision systems, and other such systems operate on the operational technology (OT) level of the industrial environment. Higher level analytic and reporting systems may operate at the higher enterprise level of the industrial environment in the information technology (IT) domain; e.g., on an office network 108 or on a cloud platform 122. Such higher level systems can include, for example, enterprise resource planning (ERP) systems 104 that integrate and collectively manage high-level business operations, such as finance, sales, order management, marketing, human resources, or other such business functions. Manufacturing Execution Systems (MES) 102 can monitor and manage control operations on the control level given higher-level business considerations. Reporting systems 106 can collect operational data from industrial devices on the plant floor and generate daily or shift reports that summarize operational statistics of the controlled industrial assets.

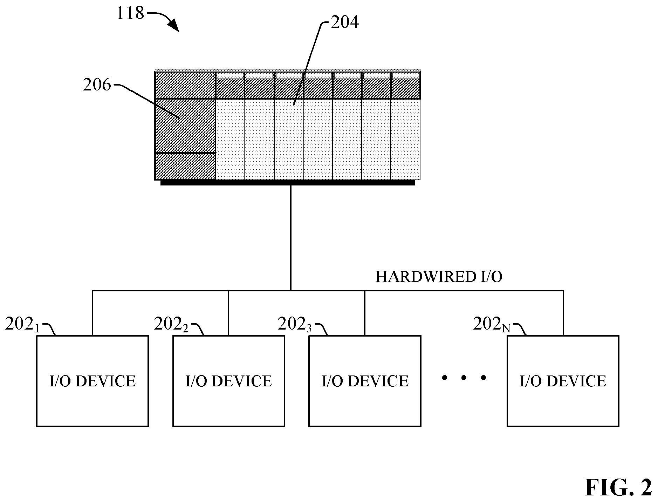

Industrial devices 120, processes, or machines controlled by industrial controllers 118 typically comprise one or more I/O devices that are electrically connected to the industrial controller 118 via the controller's I/O modules, as illustrated in FIG. 2. These I/O devices 202 may comprise digital input devices (e.g., push buttons, selector switches, safety devices, proximity switches, photo sensors, etc.), digital output devices (e.g., solenoid values, indicator lights, motor contactors, etc.), analog input devices (e.g., 4-20 mA telemetry devices, 0-10VDC telemetry devices, or other analog measurement devices), or analog output devices (e.g., variable frequency drives, flow control valves, speed control devices, etc.). Typically, each I/O device 202 is wired to a terminal of an appropriate I/O module 204 of industrial controller 118. I/O modules are generally classified as digital input, digital output, analog input, or analog output modules to accommodate the different types of I/O devices 202. As an alternative to directly hardwired I/O, in some controller configurations the I/O devices 202 may be wired to a remote I/O module located at a remote location relative to the industrial controller 118, and the controller 118 can be networked to remote I/O modules via an I/O network that serves a channel for exchanging I/O data between the controller 118 and the remote I/O modules (and their associated devices 202.

To suit the needs of each particular control application, some industrial controllers comprise a multi-slot chassis that allows a selected I/O module to be installed in each slot of the chassis. One slot of the chassis is typically dedicated to the controller's processor module 206, although some designs allow the processor module 206 to be inserted into any slot of the chassis. When a processor module 206, I/O module 204, or other type of special function module (e.g., a networking module or special function module) is installed in the controller's chassis, the module interfaces with a backplane installed at the rear of the chassis. The backplane serves as a power and data bus that both provides power to the I/O modules - typically sourced by a dedicated power module installed in the chassis 304 - and also serves as a path for data exchange between the processor module 206 and the I/O modules 204. For example, digital and analog input modules provide their measured input values to the processor module via the backplane, and the processor module sends programmatic digital and analog values to selected digital or analog output modules via the backplane for conversion to electrical output signals.

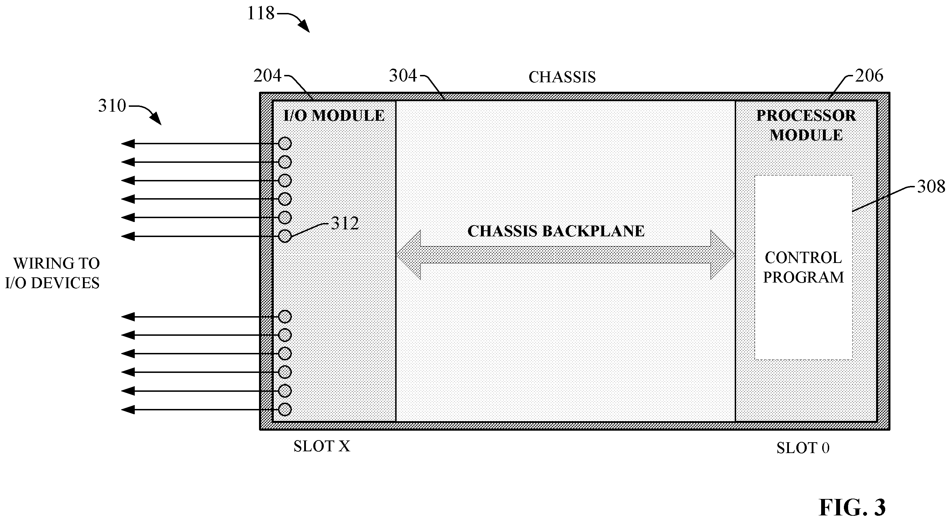

FIG. 3 is a diagram illustrating communication between a processor module 206 and an I/O module 204 within an industrial controller chassis 304. One or more terminals 312 of I/O module 204 is wired to an I/O device (e.g., I/O devices 202) via field wiring 310, allowing electrical signals to be exchanged between the I/O device and I/O module 302. If the I/O module 204 is an input module, each input I/O device provides a discrete (e.g., 24VDC) or analog (e.g., 4-20 mA or 0-10 VDC) electrical signal to the I/O module 204 via field wiring 310 for processing by processor module 206. If the I/O module 204 is an output module, the I/O module 204 sends discrete or analog output signals to the I/O devices via field wiring 310 in accordance with commands issued by the processor module 206. Processor module 206 executes a user-defined control program 308 (e.g., a ladder logic program, a sequential function block program, etc.) that controls the output signals sent to the output field devices via the output modules as a function of the received input signals and user-defined control sequences. The I/O module 204 exchanges this input and output data with processor module 206 via a data bus of the backplane, which is located at the back of the chassis 304. Typically, when an I/O module 204 or processor module 206 is inserted into a slot of the chassis 304, an interface connector on the rear side of the module plugs into the backplane, thereby providing a means for data exchange between the processor module 206 and I/O module 204. The backplane also includes a power bus that provides power to the I/O module 204 and the processor module 206.

The industrial OT environment - including critical software, firmware, OT devices, and industrial internet of things (IIoT) platforms - remains vulnerable to cyber security attacks. Some mainstream industrial OT security solutions, such as intrusion detection systems (IDSs) and continuous threat detection (CTD) systems, are designed to assess OT data traffic that has not been encrypted, even though modern OT ethernet stacks can support encrypted communications. Moreover, many industrial OT security systems, such as remote switched port analyzer (RSPAN), operate by replicating encrypted packets and transmitting these replicated packets to a separate traffic monitoring system for analysis. Such solutions can consume excessive network bandwidth since duplicates of the monitored data packets must be sent to the traffic monitoring system over a network. This approach also exposes the replicated data to possible interception or tampering as the data is moved from the sources of the data traffic to the dedicated traffic monitoring system. Also, OT security systems typically depend solely on passive network monitoring techniques, which creates a possibility that certain types of cyberattacks or intrusions that subvert this passive monitoring - e.g., replacement of a controller module with an untrusted module that carries malicious software - will not be detected.

To address these and other issues, one or more embodiments described herein provide an in-chassis security module that leverages common industrial protocol (CIP) security and executes direct, on-chassis industrial security monitoring of the controller backplane, thereby mitigating the need for packet replication. In one or more embodiments, a security module that is installable on the backplane of an industrial controller is configured to perform both passive and active security monitoring of data packets on the controller's backplane. The security module can leverage a learning algorithm as well as user-defined security parameters to monitor data packets sent to or from the controller module via the backplane, identify data traffic or traffic patterns that deviate from expected characteristics, and flag this activity as a potential security concern. The security module can also periodically query modules or devices connected to the backplane to determine whether any trusted devices have been replaced with untrusted devices that may carry malicious software, or to determine whether a malicious program or routine has been downloaded to the controller module.

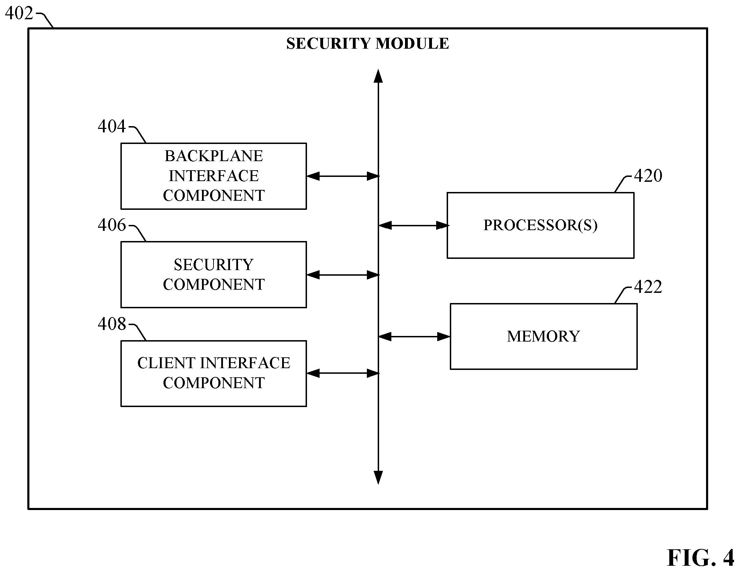

FIG. 4 is a block diagram of an example security module 402 that implements on-chassis backplane intrusion detection and continuous threat detection. Security module 402 can be installed on the backplane of an industrial controller 118, and can implement the security features described herein.

Security module 402 can include a backplane interface component 404, a security component 406, a client interface component 408, one or more processors 420, and memory 422. In various embodiments, one or more of the backplane interface component 404, security component 406, client interface component 408, the one or more processors 420, and memory 422 can be electrically and/or communicatively coupled to one another to perform one or more of the functions of the security module 402. In some embodiments, components 404, 406, and 408 can comprise software instructions stored on memory 422 and executed by processor(s) 420. Security module 402 may also interact with other hardware and/or software components not depicted in FIG. 4. For example, processor(s) 420 may interact with one or more external user interface devices, such as a keyboard, a mouse, a display monitor, a touchscreen, or other such interface devices.

Backplane interface component 404 can be configured to electrically and communicatively connect the security module 402 to the backplane of an industrial controller 118 (e.g., a backplane installed at the back of the controller chassis). Backplane interface component 404 can include, for example, a backplane connector that plugs into or otherwise interfaces with a backplane interface port, together with any electronics or software necessary to exchange data with and receive power from the backplane.

Security component 406 can perform various types of security monitoring and reporting - such as CTD and IDS - based in part on monitoring of data traffic on the controller backplane. These features are described in more detail below.

Client interface component 408 can be configured to exchange data with a client device interfaced with the security module 402, or with the processor module of the industrial controller 118 with which the security module 402 is interfaced. Example client devices include desktop, laptop, or tablet computer; mobile devices such as smart phones; or other such client devices.

The one or more processors 420 can perform one or more of the functions described herein with reference to the systems and/or methods disclosed. Memory 422 can be a computer-readable storage medium storing computer-executable instructions and/or information for performing the functions described herein with reference to the systems and/or methods disclosed.

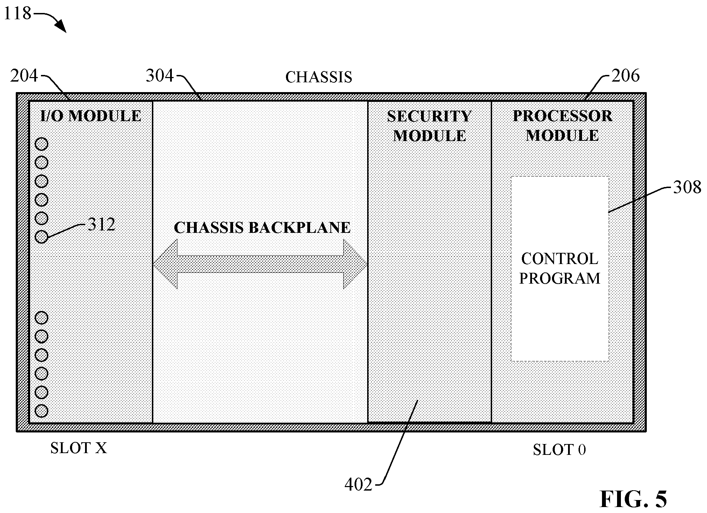

FIG. 5 is a diagram of an example industrial controller in which a security module 402 according to the present invention has been installed. Security module 402 can be installed in any available slot of the controller's chassis 304, and can be designed to be compatible with the type of controller platform with which the module 402 will be used. In some embodiments, when the security module 402 is installed, a plug on the back of the module 402 interfaces with a backplane port associated with the selected slot of the chassis, and the module's backplane interface component 404 electrically and communicatively interfaces the security module 402 to the backplane via the port. Some embodiments of the security module 402 may be designed to physically interface with the backplane via other means, depending on the hardware platform of the controller.

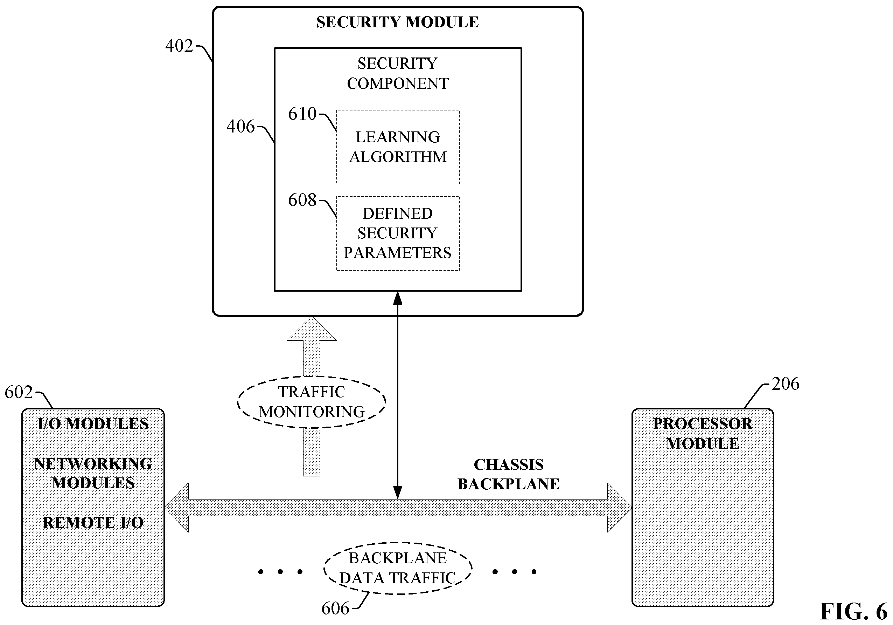

The security module 402 can use both passive monitoring of data traffic on the controller's backplane and active querying of devices connected to the backplane to detect industrial automation controls system (IACS) network intrusions, malicious transmissions to communication modules installed on the controller 118, prohibited or unexpected manipulation of I/O modules, and prohibited or unexpected reconfigurations of the industrial controller's configuration or programming. FIG. 6 is a diagram illustrating passive monitoring of backplane data traffic 606 by the security module's security component 406. As noted above, backplane data traffic 606 can include either encrypted or non-encrypted data packets sent by the processor module 206 to other modules 602 - e.g., I/O modules, networking modules, remote I/O modules, special function modules, etc. - that are connected to the controller's backplane, data packets received by the processor module 206 from those modules 602, configuration data sent to the processor module 206 or one of the other modules 602 from a client device connected to the controller (e.g., control programming, configuration parameters, network settings, etc.), or other such data traffic.

The security module 402 can collect and monitor this backplane data, as well as data sent to the industrial controller's chassis 304. Security analysis of the backplane data packets is performed on the security module 402 itself. As such, there is no need to replicate and send these data packets to remote security systems for analysis. This eliminates the need for complex or high throughput networks to accommodate transmission of these replicated data packets, and eliminates the risk of repudiation or loss of data integrity as a result of transmitting the replicated data packets to a remote monitoring system. In this way, the security module 402 blends advantages of both host-based IDS with network-based IDS.

The security module 402 can implement on-chassis threat detection using on-chassis classification, machine learning, and threat analysis. To this end, the security module 402 can execute learning algorithms 610, such as heuristic machine learning algorithms, to learn to detect security threats from the monitored backplane data. This can include learning patterns of data traffic on the backplane so that deviations from these learned patterns can be identified and reported. Security algorithms executed by the security module 402 can utilize custom backplane binaries and knowledge of the controller platform on which the module 402 is installed to develop heuristic algorithms that maximize accuracy of threat reporting. According to an example learning algorithm, the security module 402 can independently learn typical operating behaviors - e.g., typical data packet traffic over the backplane - over time. Once these typical data traffic behaviors are learned and established, the security module 402 can subsequently identify deviations from these typical operating patterns as potential threats.

In an example scenario, the security module's security component 406 can identify, based on monitoring of the backplane data traffic 606, periodic patterns of data traffic as a function of normal machine operating cycles, whereby certain types of inter-module communications across the backplane are expected to occur at regular intervals while a machine that is being monitored and controlled by the industrial controller is in a given operating mode. After learning and establishing this pattern, the security module 402 can monitor the backplane data traffic 606 for deviations from this pattern and generate notifications upon detection of such notifications.

In another example, the security component 406 can learn, based on monitoring of the backplane data traffic 606, that data traffic indicative of a reconfiguration of the processor module 206 or other device attached to the backplane does not typically occur between certain hours of the day (which may correspond to off-shift hours). This pattern may result from the plant's policy that personnel should not be editing the processor module's control program or configuration parameters during off-shift hours. Similarly, the security component 406 may learn that backplane data traffic 606 typically stays below a particular data rate or frequency between certain off-shift hours. Once these patterns have been identified, the security component 406 can perform continuous security monitoring of the backplane data traffic 606 in view of these learned patterns and generate a notification upon determining that the monitored pattern of data traffic 606 deviates from these expected behaviors.

The backplane data traffic patterns discussed above are only intended to be exemplary, and it is to be appreciated that embodiments of the security module 402 can be trained to learn substantially any type of data traffic pattern based on monitoring and analysis of the backplane data traffic 606 over time, and to use these patterns to establish baselines of expected backplane data traffic. These patterns can be defined as a function of the time of day, day of the week, operating shifts, machine operating modes, or other such parameters. Once these baselines are established, the security module 402 can continue monitoring the backplane data traffic 606 for deviations from these baseline patterns and generate notifications or reports upon detection of such deviations.

In addition to establishing baselines of normal or expected backplane data traffic based on learned traffic patterns, the security module 402 can also enforce rules-based security monitoring based on user-defined security parameters 608 or data traffic rules submitted to the module 402 by a user. To establish these user-defined parameters 608 or rules, the security module 402 can be programmed using a suitable client device (e.g., a laptop, desktop, or tablet computer; a mobile smart device; or another types of client device) that is communicatively connected to the module 402 via the module's client interface component 408 either directly, via a network connection, or via the processor module 206. In some embodiments, the client interface component 408 can deliver configuration interfaces to the client device that guide the user through the process of defining security parameters 608 or rules to be enforced by the security module 402.

Example security parameters 608 or rules can define permitted or prohibited types of data traffic or data traffic patterns, as well as conditions under which the security rules are to be enforced. An example security rule may specify that the control program 308 executed by the controller's processor module 206 is not to be edited or replaced during a specified range of times (e.g., after 4:00 pm and before 8:00 pm the following day), or on specified days of the week. Once this rule is established, the module's security component 406 will monitor the backplane data traffic 606 for data or data traffic patterns indicative of a program modification or a downloading of a new control program 308, and generate a notification in response to determining that such data traffic occurs within the prohibited timeframes specified by the security rule. In some scenarios, rather than associating a rule with a specified permissible (or impermissible) time range, a security rule may specify that certain types of data traffic 606 are to be prohibited during specified machine operations or other production activities. Security rules may also specify types of data traffic 606 that are prohibited under any circumstances, regardless of time or current production activities.

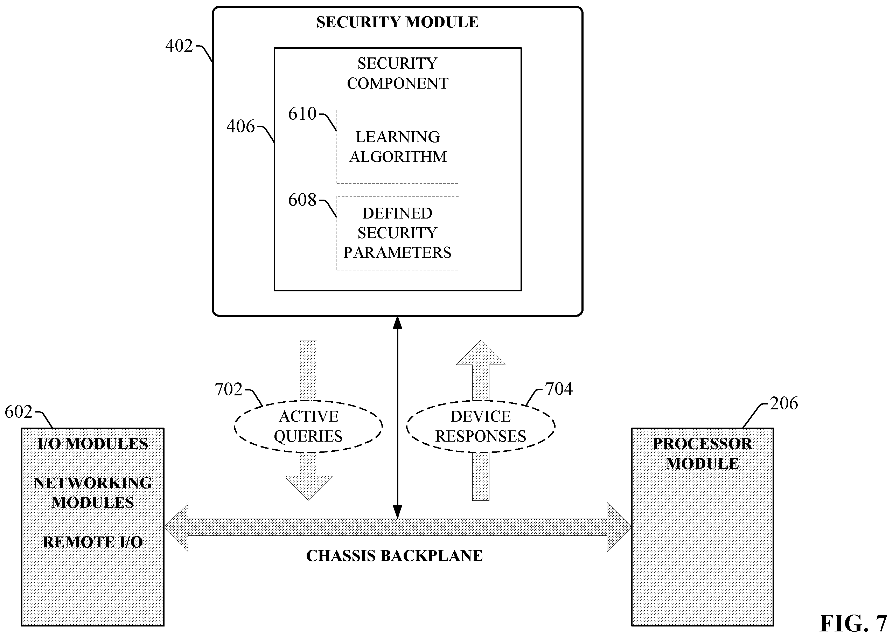

In addition to passive monitoring of the controller backplane, security module 402 can also perform active security monitoring of devices connected to the backplane. FIG. 7 is a diagram illustrating active security monitoring performed by the security module's security component 406. According to active monitoring, the security component 406 generates and sends active queries 702 for health or security statuses to respective devices and applications associated with the industrial controller. Each queried device returns a response 704 to its received query 702 conveying information regarding its security or health status. If a device response 704 indicates a status indicative of an unauthorized tampering or intrusion, the security module 402 generates a notification reporting the suspicious device status. The security component 406 can be configured to send these active queries 702 on a periodic basis, or in response to specified conditions (e.g., upon power-up of the controller, prior to initiation of a specified machine operation, etc.). This active monitoring can enable on-chassis integrity monitoring of the industrial controller's applications (e.g., control program 308) and all associated modules 602 (e.g., I/O modules, networking modules, special function modules, etc.) installed in the controller's chassis 304.

Hardware and software aspects that can be actively monitored in this manner can include, but are not limited to, the control program 308 being executed by the processor module 206, identities of any of the devices connected to the controller's backplane (e.g., modules 602 or the processor module 206), the firmware installed on any of the devices connected to the backplane, trust certificates installed on any of the devices, values of configuration parameter settings for the devices, or other such device characteristics. By actively monitoring these device properties, the security module 402 can identify suspicious changes to the controller's hardware or software that may be indicative of device tampering or intrusion, but which could not be detected by the passive backplane data monitoring described above in connection with FIG. 6.

In an example security scenario, a networking module (e.g., an Ethernet module) installed on the controller's backplane may be removed by an unauthorized person and replaced with a similar networking module on which malicious software or an untrusted firmware version is installed. This act of replacing the networking module may not have induced data traffic on the backplane that could be detected as a security concern by the passive backplane monitoring being performed by the security module 402. However, as part of the active monitoring carried out by the security module 402, the security component 406 sends out a periodic active query 702 to the networking module requesting information about the module that can be used to verify the module's authenticity, health, or security. The requested information may comprise, for example, the module's unique identifier (e.g., a media access control, or MAC, address), a trust certificate that had been installed on the original networking module, a version number of the firmware installed on the module, or other such information. In response to receiving the active query 702, the module replies with a response 704 that includes the requested information. Based on the content of the response 704, the security component 406 determines whether the module is valid; e.g., whether the module is the originally installed and trusted module, or whether the module includes a valid trust certificate that identifies the module as a trusted device. If the device response 704 does not satisfy such security criteria, the security module can generate a notification identifying the suspicious module. In some embodiments, the security module 402 may also disable the suspicious module, or isolate the suspicious module from the backplane, in response to determining that the response 704 does not satisfy all security criteria.

Active queries 702 can also be used to determine whether configuration parameters on any of the backplane-connected devices have been impermissibly modified in a manner that was not detected by the passive monitoring. This can include querying relevant parameters of the processor module 206 and any of the backplane-connected modules 602 that are software- or hardware-configurable. Substantially any of the configuration parameters can be validated via active monitoring. In some embodiments, the user can configure the security module 402 to only query for a specified subset of available configuration parameters considered to be of interest for security and safety reasons. Example parameters that can be actively monitored in this manner can include, but are not limited to, network or communication settings, read and write permissives, analog I/O scale factors, or other such parameters.

The security module 402 can send out active queries 702 to each device connected to the backplane on a periodic basis. The frequency at which active queries 702 are sent can be specified by the user. In some embodiments, the security component can determine the devices to which active queries 702 are to be sent based on automated detection of devices that are connected to the backplane, by reading the configuration data for the processor module 206 to identify devices that the processor module 206 is currently configured to communicate with, or based on user configuration data that explicitly defines which devices are to be queried.

In some embodiments, the security module 402 can also include an ethernet port that allows the module 402 to inspect remote I/O networks, device level rings (DLRs), or other networks for communications indicative of intrusions or other cyberattacks.

Some embodiments of security module 402 can also participate in CIP security and trust chain inclusion in connection with on-chassis CDT and IDS. For example, some embodiments of the security module 402 can integrate into open DeviceNet vendors association (ODVA) CIP security without violation of the trust chain (that is, data inspection does not require modification and re-transmission of encrypted data). The security module 402 can also enable connection to other OT intrusion detection solutions without additional network or infrastructure loading (in contrast to RSPAN techniques).

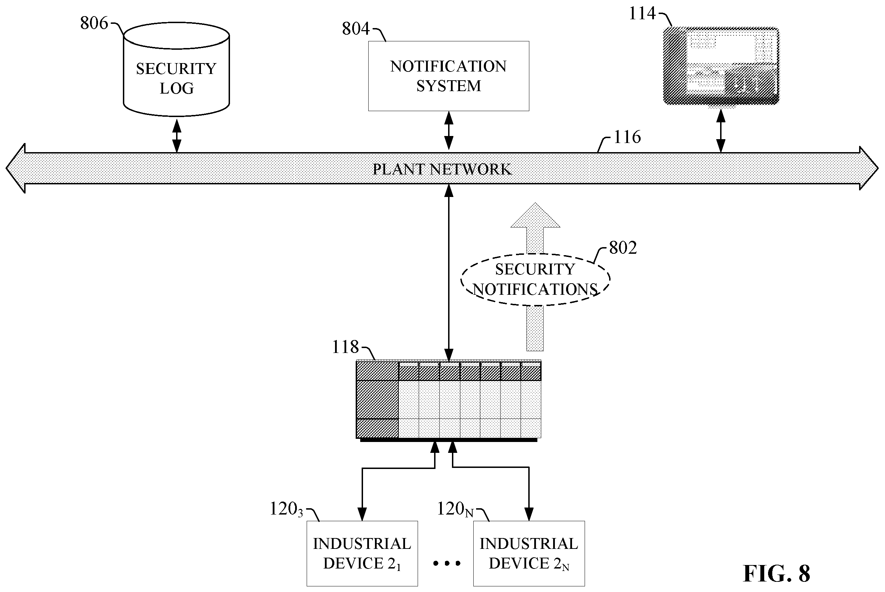

As noted above, the security module 402 can generate security notifications in response to detecting potential intrusions or security threats based on the passive or active security monitoring described in the foregoing examples. FIG. 8 is a diagram depicting an example architecture in which security notifications 802 are generated and delivered by the security module 402. Any suitable format for security notifications 802 is within the scope of one or more embodiments of this disclosure. In some embodiments, upon detection of a potential security threat based on results of the passive or active monitoring described above, the security module 402 can send a security notification 802 to a notification system 804 that resides on the plant network 116 or on a cloud platform. The notification 802 can include information that can be leveraged by the notification system 804 to determine appropriate recipients for the notification 802. For example, the notification 802 can include an identity of the controller 118 or production area affected by the potential security threat, and the notification system 804 can use this information to identify maintenance or management staff assigned to the affected production area. Notification system 804 can then relay the notification 802 to client devices associated with the identified personnel (e.g., text notifications to personal mobile devices associated with the selected recipients, email notifications sent to the email accounts of the selected recipients, etc.).

In another example implementation, the security module 402 can send notifications 802 to an HMI terminal 114 for rendering on an HMI display. This can alert operators who are present at the machine being monitored and controlled by the controller 118 of the potential security threat or intrusion. Security notifications 802 can also be sent to a security log 806 or other type of database to be timestamped and archived for subsequent review.

Security notifications 802 can include summary information for the potential threat or intrusion detected by the passive or active monitoring performed by the security module 402. Example threat summary information included in the notification 802 can include, but is not limited to, an identity of the device (e.g., processor module 206, I/O module, etc.) affected by the detected threat, a description of the nature of the detected threat (e.g., a modified configuration parameter detected by the active monitoring, an unexpected backplane data traffic pattern detected by the passive monitoring that deviates from an expected traffic pattern or that violates a defined security parameter 608 or rule, a type of data packet discovered by the passive monitoring that is indicative of a potential threat or intrusion, etc.), a recommended countermeasure for addressing the potential threat, or other such information. Since the security module 402 performs its security monitoring on-chassis and outputs only status summaries based on results of the monitoring, rather than duplicating and transmitting all backplane data traffic to external systems for off-chassis analysis, network bandwidth is preserved and controller data is not exposed to potential interception by transmitting this data over the network.

Although examples described above assume that the passive and active security monitoring features are embodied on a security module 402 that can be installed in the controller chassis and connects directly to the controller backplane, embodiments in which the OT security monitoring features described above are implemented on a stand-alone device that monitors the controller backplane over a network or wired connection are also contemplated. Also, rather than being embodied on a module that is separate from the processor module 206, the security monitoring features can be embodied on the processor module 206 itself in some embodiments.

The on-chassis backplane IDS and CDT monitoring system described herein offers reliable security monitoring of an industrial controller's backplane to detect control network intrusions; malicious transmissions directed to communication modules installed on the controller; unanticipated manipulation, replacement, or reconfiguration of controller modules; and unanticipated reprogramming of the controller. Since the security monitoring and analysis is performed on-chassis rather than externally to the controller, the backplane data does not need to be replicated and migrated to an external security monitoring system for analysis, thereby preserving network bandwidth relative to other OT security monitoring solutions. The on-chassis security monitoring system performs both active and passive security monitoring, offering comprehensive protection against OT cyber security attacks.

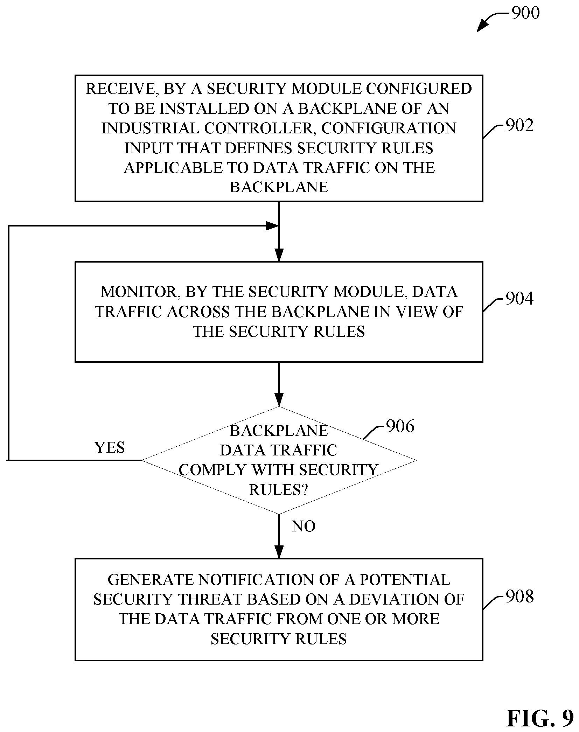

FIGs 9-11 illustrate example methodologies in accordance with one or more embodiments of the subject application. While, for purposes of simplicity of explanation, the methodologies shown herein are shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 9 illustrates an example methodology 900 for performing passive security monitoring of data traffic on the backplane of an industrial controller in view of user-defined security rules or parameters. Initially, at 902, configuration input is received by a security module configured to be installed on a backplane of an industrial controller. The security rules area applicable to data traffic on the controller's backplane, and can define such security rules as permitted or prohibited patterns of data traffic on the backplane, permitted or prohibited types of data packets, or other such security rules. One or more of the rules can be defined a function of times of day, days of the week, work shifts, a maintenance operation being performed, or other such factors.

At 904, data traffic across the backplane is monitored by the security module in view of the security rules. At 906, a determination is made, based on the monitoring performed at step 904, as to whether the backplane data traffic complies with all security rules defined at step 902. If the data traffic complies with the defined security rules (YES at step 906), the methodology returns to step 904 and monitoring continues. If the data traffic violates one or more of the defined security rules (NO at step 906), the methodology proceeds to step 908, where a notification of a potential security threat is generated by the security module based on the deviation of the data traffic from one or more of the security rules. The notification can comprise a summary of the detected security threat, the nature of which is inferred based on the nature of the deviation or the security rule that was violated by the data traffic. The notification summary can also include such information as the identity of the controller on which the suspicious data traffic was detected, a time of the detected security rule violation, a production area in which the security rule violation was detected, or other such information.

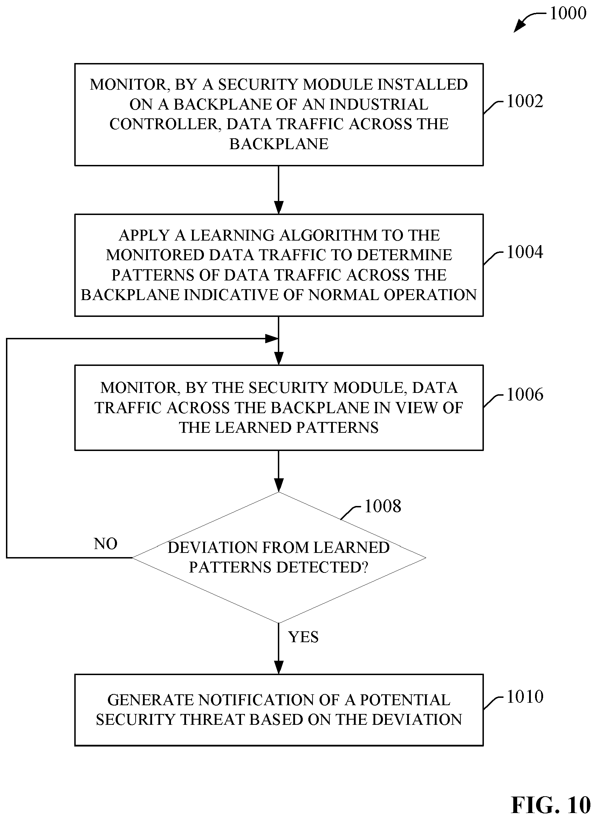

FIG. 10 illustrates an example methodology 1000 for performing passive security monitoring of data traffic on the backplane of an industrial controller based on learned patterns of backplane data traffic. Initially, at 1002, data traffic across the backplane of an industrial controller is monitored by a security module installed on the backplane. This initial monitoring may correspond to a training phase during which expected patterns of backplane data traffic are learned. At 1004, a learning algorithm is applied to the monitored data traffic to determine patterns of backplane data traffic indicative of normal operation. These learned patterns may be a function of the time of day, the day of the week, a production operation being performed by a machine that is monitored and controlled by the industrial controller, or other such functions.

At 1006, data traffic across the backplane is monitored by the security module in view of the expected patterns of backplane data traffic learned at step 1004. At 1008, a determination is made by the security module, based on the monitoring performed at step 1006, as to whether the backplane data traffic deviates from the expected patterns of data traffic learned at step 1004. If no deviation is detected (NO at step 1008), the methodology returns to step 1006 and the monitoring continues. Alternatively, if a deviation is detected (YES at step 1008), the methodology proceeds to step 1010, where a notification of a potential security threat is generated by the security module based on the detected deviation (similar to step 908 of methodology 900).

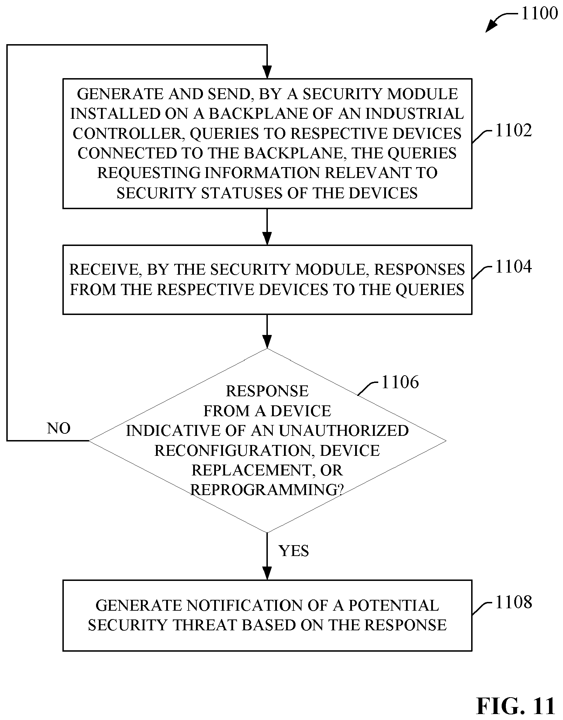

FIG. 11 illustrates an example methodology 1100 for performing active security monitoring of devices connected to the backplane of an industrial controller. Initially, at 1102, a security module connected to the backplane of an industrial controller generates and sends queries to devices connected to the backplane. These queries are sent via the backplane, and request information relevant to security statuses of the devices. The requested information can include, but is not limited to, a trust certificate of the device, one or more configuration parameter settings of the devices, a state of a control program, firmware versions installed on the devices, or other such information. These queries can be sent to the industrial controller, modules that are directly installed on the backplane (e.g., I/O modules, networking modules, special function modules, etc.), or remote modules that are connected to the backplane via a remote I/O network connection.

At 1104, the security module receives responses to the queries from the respective devices. At 1106, a determination is made as to whether a response from a device is indicative of an unauthorized reconfiguration, device replacement, or reprogramming of the device. This determination can be based on a determination that the response indicates an improper or missing trust certificate, an incorrect firmware version, an unauthorized modification to a configuration parameter or control program, or other such indicators of potential security threats or unauthorized device tampering. If the responses from the devices do not indicate potential security threats (NO at step 1106), the methodology returns to step 1102, and steps 1102-1106 are repeated. In some embodiments, steps 1102-1106 can be repeated on a periodic basis according to a defined frequency.

If a response from a device suggests a potential security threat (YES at step 1106), the methodology proceeds to step 1108, where a notification of the potential security threat is generated based on the response. The notification can comprise a summary of the detected threat, and can include such information as an identity of the device whose response is indicative of a possible security threat or tampering, the nature of the threat (e.g., an improperly modified control program or configuration parameter, a replacement of an authorized device with an unauthorized device, etc.), or other such information.

Embodiments, systems, and components described herein, as well as control systems and automation environments in which various aspects set forth in the subject specification can be carried out, can include computer or network components such as servers, clients, programmable logic controllers (PLCs), automation controllers, communications modules, mobile computers, on-board computers for mobile vehicles, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the term PLC or automation controller as used herein can include functionality that can be shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, and human machine interface (HMI) that communicate *via* the network, which includes control, automation, and/or public networks. The PLC or automation controller can also communicate to and control various other devices such as standard or safety-rated I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, safety networks, and Ethernet/IP. Other networks include Ethernet, DH/DH+, Remote I/O, Fieldbus, Modbus, Profibus, CAN, wireless networks, serial protocols, Open Platform Communications Unified Architecture (OPC-UA), and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

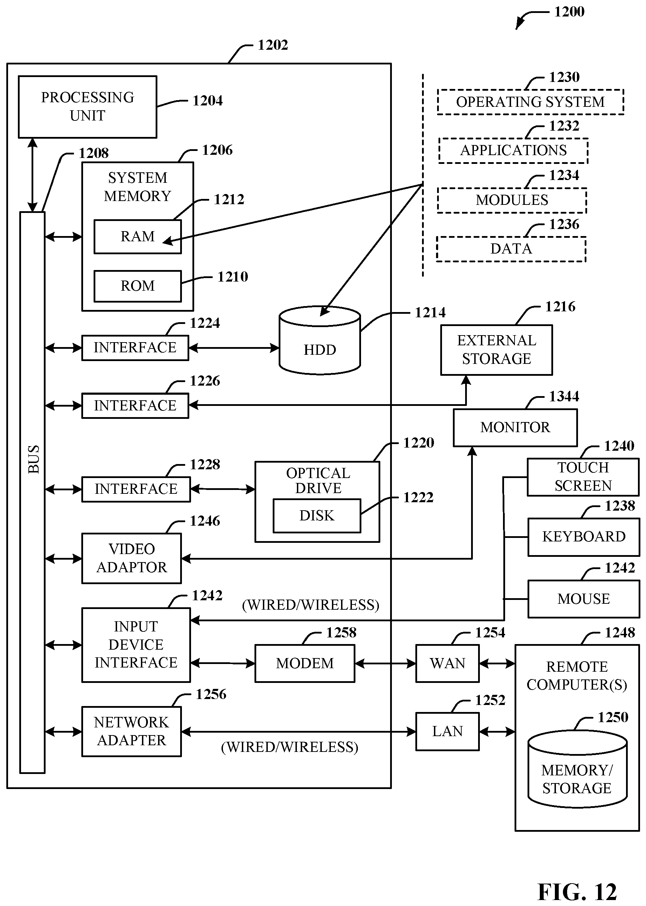

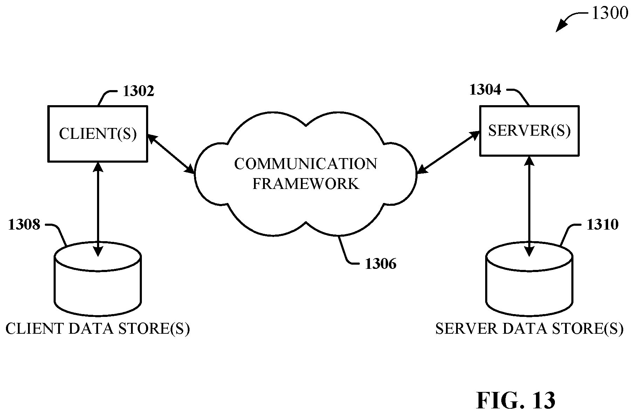

In order to provide a context for the various aspects of the disclosed subject matter, FIGs. 12 and 13 as well as the following discussion are intended to provide a brief, general description of a suitable environment in which the various aspects of the disclosed subject matter may be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 12, the example environment 1200 for implementing various embodiments of the aspects described herein includes a computer 1202, the computer 1202 including a processing unit 1204, a system memory 1206 and a system bus 1208. The system bus 1208 couples system components including, but not limited to, the system memory 1206 to the processing unit 1204. The processing unit 1204 can be any of various commercially available processors. Dual microprocessors and other multi-processor architectures can also be employed as the processing unit 1204.

The system bus 1208 can be any of several types of bus structure that can further interconnect to a memory bus (with or without a memory controller), a peripheral bus, and a local bus using any of a variety of commercially available bus architectures. The system memory 1206 includes ROM 1210 and RAM 1212. A basic input/output system (BIOS) can be stored in a non-volatile memory such as ROM, erasable programmable read only memory (EPROM), EEPROM, which BIOS contains the basic routines that help to transfer information between elements within the computer 1202, such as during startup. The RAM 1212 can also include a highspeed RAM such as static RAM for caching data.

The computer 1202 further includes an internal hard disk drive (HDD) 1214 (e.g., EIDE, SATA), one or more external storage devices 1216 (e.g., a magnetic floppy disk drive (FDD) 1216, a memory stick or flash drive reader, a memory card reader, etc.) and an optical disk drive 1220 (e.g., which can read or write from a CD-ROM disc, a DVD, a BD, etc.). While the internal HDD 1214 is illustrated as located within the computer 1202, the internal HDD 1214 can also be configured for external use in a suitable chassis (not shown). Additionally, while not shown in environment 1200, a solid state drive (SSD) could be used in addition to, or in place of, an HDD 1214. The HDD 1214, external storage device(s) 1216 and optical disk drive 1220 can be connected to the system bus 1208 by an HDD interface 1224, an external storage interface 1226 and an optical drive interface 1228, respectively. The interface 1224 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 1202, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1212, including an operating system 1230, one or more application programs 1232, other program modules 1234 and program data 1236. All or portions of the operating system, applications, modules, and/or data can also be cached in the RAM 1212. The systems and methods described herein can be implemented utilizing various commercially available operating systems or combinations of operating systems.

Computer 1202 can optionally comprise emulation technologies. For example, a hypervisor (not shown) or other intermediary can emulate a hardware environment for operating system 1230, and the emulated hardware can optionally be different from the hardware illustrated in FIG. 12. In such an embodiment, operating system 1230 can comprise one virtual machine (VM) of multiple VMs hosted at computer 1202. Furthermore, operating system 1230 can provide runtime environments, such as the Java runtime environment or the .NET framework, for application programs 1232. Runtime environments are consistent execution environments that allow application programs 1232 to run on any operating system that includes the runtime environment. Similarly, operating system 1230 can support containers, and application programs 1232 can be in the form of containers, which are lightweight, standalone, executable packages of software that include, e.g., code, runtime, system tools, system libraries and settings for an application.

Further, computer 1202 can be enable with a security module, such as a trusted processing module (TPM). For instance with a TPM, boot components hash next in time boot components, and wait for a match of results to secured values, before loading a next boot component. This process can take place at any layer in the code execution stack of computer 1202, e.g., applied at the application execution level or at the operating system (OS) kernel level, thereby enabling security at any level of code execution.

A user can enter commands and information into the computer 1202 through one or more wired/wireless input devices, e.g., a keyboard 1238, a touch screen 1240, and a pointing device, such as a mouse 1242. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1204 through an input device interface 1244 that can be coupled to the system bus 1208, but can be connected by other interfaces, such as a parallel port, an IEEE 1394 serial port, a game port, a USB port, an IR interface, a BLUETOOTH^{®} interface, etc.

A monitor 1244 or other type of display device can be also connected to the system bus 1208 via an interface, such as a video adapter 1246. In addition to the monitor 1244, a computer typically includes other peripheral output devices (not shown), such as speakers, printers, etc.

The computer 1202 can operate in a networked environment using logical connections via wired and/or wireless communications to one or more remote computers, such as a remote computer(s) 1248. The remote computer(s) 1248 can be a workstation, a server computer, a router, a personal computer, portable computer, microprocessor-based entertainment appliance, a peer device or other common network node, and typically includes many or all of the elements described relative to the computer 1202, although, for purposes of brevity, only a memory/storage device 1250 is illustrated. The logical connections depicted include wired/wireless connectivity to a local area network (LAN) 1252 and/or larger networks, e.g., a wide area network (WAN) 1254. Such LAN and WAN networking environments are commonplace in offices and companies, and facilitate enterprise-wide computer networks, such as intranets, all of which can connect to a global communications network, e.g., the Internet.

When used in a LAN networking environment, the computer 1202 can be connected to the local network 1252 through a wired and/or wireless communication network interface or adapter 1256. The adapter 1256 can facilitate wired or wireless communication to the LAN 1252, which can also include a wireless access point (AP) disposed thereon for communicating with the adapter 1256 in a wireless mode.

When used in a WAN networking environment, the computer 1202 can include a modem 1258 or can be connected to a communications server on the WAN 1254 via other means for establishing communications over the WAN 1254, such as by way of the Internet. The modem 1258, which can be internal or external and a wired or wireless device, can be connected to the system bus 1208 via the input device interface 1242. In a networked environment, program modules depicted relative to the computer 1202 or portions thereof, can be stored in the remote memory/storage device 1250. It will be appreciated that the network connections shown are example and other means of establishing a communications link between the computers can be used.

When used in either a LAN or WAN networking environment, the computer 1202 can access cloud storage systems or other network-based storage systems in addition to, or in place of, external storage devices 1216 as described above. Generally, a connection between the computer 1202 and a cloud storage system can be established over a LAN 1252 or WAN 1254 e.g., by the adapter 1256 or modem 1258, respectively. Upon connecting the computer 1202 to an associated cloud storage system, the external storage interface 1226 can, with the aid of the adapter 1256 and/or modem 1258, manage storage provided by the cloud storage system as it would other types of external storage. For instance, the external storage interface 1226 can be configured to provide access to cloud storage sources as if those sources were physically connected to the computer 1202.

The computer 1202 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

FIG. 13 is a schematic block diagram of a sample computing environment 1300 with which the disclosed subject matter can interact. The sample computing environment 1300 includes one or more client(s) 1302. The client(s) 1302 can be hardware and/or software (e.g., threads, processes, computing devices). The sample computing environment 1300 also includes one or more server(s) 1304. The server(s) 1304 can also be hardware and/or software (e.g., threads, processes, computing devices). The servers 1304 can house threads to perform transformations by employing one or more embodiments as described herein, for example. One possible communication between a client 1302 and servers 1304 can be in the form of a data packet adapted to be transmitted between two or more computer processes. The sample computing environment 1300 includes a communication framework 1306 that can be employed to facilitate communications between the client(s) 1302 and the server(s) 1304. The client(s) 1302 are operably connected to one or more client data store(s) 1308 that can be employed to store information local to the client(s) 1302. Similarly, the server(s) 1304 are operably connected to one or more server data store(s) 1310 that can be employed to store information local to the servers 1304.

What has been described above includes examples of the subject innovation. It is, of course, not possible to describe every conceivable combination of components or methodologies for purposes of describing the disclosed subject matter, but one of ordinary skill in the art may recognize that many further combinations and permutations of the subject innovation are possible. Accordingly, the disclosed subject matter is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (e.g., hard disk, floppy disk, magnetic strips...), optical disks [e.g., compact disk (CD), digital versatile disk (DVD)...], smart cards, and flash memory devices (e.g., card, stick, key drive...).

## Claims

1. A security module located in an industrial controller (118) and connected via a chassis backplane (304) of the industrial controller (118) with one or more I/O modules (204) and a processor module (206) connected with the chassis backplane (304), the security module comprising:
memory (422) that stores executable components; and
one or more processors (420), operatively coupled to the memory (422), that executes the executable components, the executable components comprising:
a backplane interface component (404) configured to interface the security module (402) over the chassis backplane (304) of the industrial controller (118) with the processor module (206), wherein the chassis backplane (304) serves as a path for data traffic between the processor module (206) and the one or more I/O modules (204); and
a security component (406) configured to perform security monitoring of the data traffic on the chassis backplane (304) and to generate a notification in response to detecting, based on the security monitoring, that a characteristic of the data traffic is indicative of a security intrusion.

2. The security module of claim 1, wherein the characteristic of the data traffic indicative of the security intrusion is at least one of a type of data packet present in the data traffic, a prohibited data communication between modules connected to the backplane, a prohibited increase in a rate of the data traffic, a prohibited editing of a control program installed on the processor module (206) of the industrial controller (118), or a prohibited downloading of a new control program to the processor module (206).

3. The security module of claim 1 or 2, further comprising a client interface component (408) configured to receive, from a client device, configuration input that defines security rules to be enforced by the security component (406),
wherein the security rules define at least one of prohibited patterns of the data traffic or prohibited types of data packets on the chassis backplane (304); and/or
wherein the security component (406) is configured to generate the notification in response to determining, based on the security monitoring, that the data traffic violates a security rule of the security rules.

4. The security module of one of claims 1 to 3, wherein the security component (406) is configured to:
learn patterns of the normal data traffic based on monitoring of the data traffic over time, and
generate the notification in response to determining, subsequent to learning the patterns of normal data traffic, that the data traffic deviates from the patterns of normal data traffic; and/or
wherein the security component (406) learns the patterns of normal data traffic as a function of at least one of a time of day, a day of the week, a work shift, or an operating mode of a machine that is monitored and controlled by the industrial controller (118).

5. The security module of one of claims 1 to 4 further configured to send, via the chassis backplane (304), queries to devices comprising the one or more I/O modules (204) of the industrial controller (118), and to generate another notification in response to determining that a response to the query received from a device, of the devices, is indicative of a security intrusion.

6. The security module of claim 5, wherein the devices connected to the chassis backplane (304) further comprise at least one of a networking module, a special function module, or a remote I/O module; or
wherein the response to the query comprises at least one of a value of a configuration parameter of the device, an indication of a firmware version installed on the device, an identity of a trust certificate installed on the device, or a unique identifier of the device.

7. The security module of one of claims 1 to 6, wherein the security module (402) is configured to monitor encrypted data traffic on the chassis backplane (304).

8. The security module of one of claims 1 to 7, wherein the notification comprises a summary of the security intrusion, and the summary comprises at least one of a device targeted by the security intrusion, a type of the security intrusion, a recommended countermeasure for addressing the security intrusion, an identity of the industrial controller (118), or an indication of a production area in which the security intrusion was detected.

9. A method of operating a security module located in an industrial controller (118) and connected via a chassis backplane (304) of the industrial controller (118) with one or more I/O modules (204) and a processor module (206) connected with the chassis backplane (304), the method comprising:
interfacing, by the security module (402) with the processor module (206), over the chassis backplane (304) of the industrial controller (118);
performing, by the security module (402), security monitoring of data traffic across the chassis backplane (304), wherein the chassis backplane (304) serves as a path for data traffic between the processor module (206) and the one or more I/O modules (204); and
in response to determining, based on the security monitoring, that a characteristic of the data traffic is indicative of a security threat, generating, by the security module (402), a notification directed to one or more client devices.

10. The method of claim 9, wherein the characteristic of the data traffic indicative of the security threat is at least one of a type of data packet present in the data traffic, a prohibited data communication between modules connected to the chassis backplane (304), a prohibited increase in a rate of the data traffic, a prohibited editing of a control program installed on the processor module (206) of the industrial controller (118), or a prohibited downloading of a new control program to the processor module (206).

11. The method of claim 9 or 10, wherein:
the generating of the notification comprises generating the notification in response to determining, based on the security monitoring, that the data traffic violates a defined security rule, and
the defined security rule specifies at least one of a prohibited pattern of the data traffic or a prohibited type of data packet on the chassis backplane (304).

12. The method of one of claims 9 to 11, further comprising:
learning, by the security module (402), patterns of the normal data traffic based on monitoring of the data traffic over time, and
generating, by the security module (402), the notification in response to determining, subsequent to learning the patterns of normal data traffic, that the data traffic deviates from the patterns of normal data traffic; and/or
wherein the learning comprises learning the patterns of normal data traffic as a function of at least one of a time of day, a day of the week, a work shift, or an operating mode of a machine that is monitored and controlled by the industrial controller (118).

13. The method of one of claims 9 to 12, further comprising:
sending, by the security module (402) via the chassis backplane (304), queries to devices connected to the chassis backplane (304), and
generating, by the security module (402), another notification in response to determining that a response to the query received from a device, of the devices, is indicative of a security threat; and/or
wherein the response to the query comprises at least one of a value of a configuration parameter of the device, an indication of a firmware version installed on the device, an identity of a trust certificate installed on the device, or a unique identifier of the device.

14. A non-transitory computer-readable medium having stored thereon instructions that, in response to execution, cause a security module (402) comprising a processor to perform operations, the security model (402) located in an industrial controller (118) and connected via a chassis backplane (304) of the industrial controller (118) with one or more I/O modules (204) and a processor module (206), the operations comprising:
communicatively interfacing the security module (402) with the processor module (206) over the chassis backplane (304)
of the industrial controller (118), wherein the chassis backplane (304) serves as a path for data traffic between the processor module (206) and the one or more I/O modules (204);
performing security monitoring of data traffic across the chassis backplane (304); and
in response to determining, based on the security monitoring, that a characteristic of the data traffic is indicative of a security issue, generating a notification directed to one or more client devices.

15. The non-transitory computer-readable medium of claim 14, the operations further comprising:
sending, via the chassis backplane (304), queries to devices connected to the chassis backplane (304), and generating another notification in response to determining that a response to the query received from a device, of the devices, is indicative of a security issue.

## Patentansprüche

1. Sicherheitsmodul, angeordnet in einem Industriesteuergerät (118) und verbunden über eine Gehäuse-Rückwandplatine (304) des Industriesteuergeräts (118) mit einem oder mehreren E/A-Modulen (204) und einem Prozessormodul (206), verbunden mit der Gehäuse-Rückwandplatine (304), wobei das Sicherheitsmodul umfasst:
einen Speicher (422), der ausführbare Komponenten speichert; und
einen oder mehrere Prozessoren (420), wirksam mit dem Speicher (422) gekoppelt, welche die ausführbaren Komponenten ausführen, wobei die ausführbaren Komponenten umfassen:
eine Rückwandplatinen-Schnittstellenkomponente (404), ausgebildet als Schnittstelle zwischen dem Sicherheitsmodul (402) über die Gehäuse-Rückwandplatine (304) des Industriesteuergeräts (118) und dem Prozessormodul (206), wobei die Gehäuse-Rückwandplatine (304) als ein Pfad für Datenverkehr zwischen dem Prozessormodul (206) und dem einen oder den mehreren E/A-Modulen (204) dient; und
eine Sicherheitskomponente (406), ausgebildet zum Ausführen einer Sicherheitsüberwachung des Datenverkehrs auf der Gehäuse-Rückwandplatine (304) und zum Erzeugen einer Benachrichtigung als Reaktion auf das Erfassen basierend auf der Sicherheitsüberwachung, dass ein Merkmal des Datenverkehrs einen Sicherheitsverstoß angibt.

2. Sicherheitsmodul nach Anspruch 1, wobei das Merkmal des Datenverkehrs, das den Sicherheitsverstoß angibt, wenigstens ein Element einer Gruppe ist umfassend einen Typ eines im Datenverkehr vorhandenen Datenpakets, eine unzulässige Datenkommunikation zwischen Modulen, die mit der Rückwandplatine verbunden sind, eine unzulässige Erhöhung einer Geschwindigkeit des Datenverkehrs, eine unzulässige Bearbeitung eines auf dem Prozessormodul (206) des Industriesteuergeräts (118) installierten Steuerprogramms und ein unzulässiges Herunterladen eines neuen Steuerprogramms auf das Prozessormodul (206).

3. Sicherheitsmodul nach Anspruch 1 oder 2, ferner umfassend eine Client-Schnittstellenkomponente (408), ausgebildet zum Empfangen einer Konfigurationseingabe von einer Client-Vorrichtung, die Sicherheitsregeln definiert, die von der Sicherheitskomponente (406) durchzusetzen sind,
wobei die Sicherheitsregeln unzulässige Muster des Datenverkehrs oder/und unzulässige Typen von Datenpaketen auf der Gehäuse-Rückwandplatine (304) definieren; und/oder wobei die Sicherheitskomponente (406) zum Erzeugen der Benachrichtigung als Reaktion auf das Bestimmen basierend auf der Sicherheitsüberwachung, dass der Datenverkehr eine Sicherheitsregel der Sicherheitsregeln verletzt, ausgebildet ist.

4. Sicherheitsmodul einem der Ansprüche 1 bis 3, wobei die Sicherheitskomponente (406) ausgebildet ist zum:
Lernen von Mustern des normalen Datenverkehrs basierend auf der Überwachung des Datenverkehrs im Laufe der Zeit, und
Erzeugen der Benachrichtigung als Reaktion auf das Bestimmen nach dem Lernen der Muster des normalen Datenverkehrs, dass der Datenverkehr von den Mustern von normalem Datenverkehr abweicht, und/oder
wobei die Sicherheitskomponente (406) die Muster von normalem Datenverkehr als eine Funktion von wenigstens einem Element der Gruppe umfassend eine Tageszeit, einen Wochentag, eine Arbeitsschicht und einen Betriebsmodus einer Maschine, die vom Industriesteuergerät (118) überwacht und gesteuert wird, lernt.

5. Sicherheitsmodul nach einem der Ansprüche 1 bis 4, ferner ausgebildet zum Senden über die Gehäuse-Rückwandplatine (304) von Abfragen an Vorrichtungen, die das eine oder die mehrere E/A-Module (204) des Industriesteuergeräts (118) umfassen, und zum Erzeugen einer weiteren Benachrichtigung als Reaktion auf das Bestimmen, dass eine von einer Vorrichtung der Vorrichtungen empfangene Antwort auf die Abfrage einen Sicherheitsverstoß angibt.

6. Sicherheitsmodul nach Anspruch 5, wobei die mit der Gehäuse-Rückwandplatine (304) verbundenen Vorrichtungen ferner wenigstens ein Element umfassen der Gruppe umfassend ein Netzwerkmodul, ein Spezialfunktionsmodul und ein Remote-E/A-Modul; oder
wobei die Antwort auf die Abfrage wenigstens ein Element umfasst der Gruppe umfassend einen Wert eines Konfigurationsparameters der Vorrichtung, eine Angabe einer auf der Vorrichtung installierten Firmware-Version, eine Identität eines auf der Vorrichtung installierten Vertrauenszertifikats und einen eindeutigen Identifizierer der Vorrichtung.

7. Sicherheitsmodul nach einem der Ansprüche 1 bis 6, wobei das Sicherheitsmodul 402) zum Überwachen von verschlüsseltem Datenverkehr auf der Gehäuse-Rückwandplatine (304) ausgebildet ist.

8. Sicherheitsmodul nach einem der Ansprüche 1 bis 7, wobei die Benachrichtigung eine Zusammenfassung des Sicherheitsverstoßes umfasst und die Zusammenfassung wenigstens ein Element umfasst der Gruppe umfassend eine Vorrichtung, die das Ziel des Sicherheitsverstoßes war, einen Typ des Sicherheitsverstoßes, eine empfohlene Gegenmaßnahme zur Behebung des Sicherheitsverstoßes, eine Identität des Industriesteuergeräts (118) und eine Angabe eines Produktionsbereichs, in dem der Sicherheitsverstoß erkannt wurde.

9. Verfahren zum Betreiben eines Sicherheitsmoduls, angeordnet in einem Industriesteuergerät (118) und verbunden über eine Gehäuse-Rückwandplatine (304) des Industriesteuergeräts (118) mit einem oder mehreren E/A-Modulen (204) und einem Prozessormodul (206), verbunden mit der Gehäuse-Rückwandplatine (304), wobei das Verfahren umfasst:
Bilden einer Schnittstelle durch das Sicherheitsmodul (402) mit dem Prozessormodul (206) über die Gehäuse-Rückwandplatine (304) des Industriesteuergeräts (118);
Durchführen einer Sicherheitsüberwachung des Datenverkehrs über die Gehäuse-Rückwandplatine (304) durch das Sicherheitsmodul (402), wobei die Gehäuse-Rückwandplatine (304) als ein Pfad für Datenverkehr zwischen dem Prozessormodul (206) und dem einen oder den mehreren E/A-Modulen (204) dient; und als Reaktion auf das Bestimmen basierend auf der Sicherheitsüberwachung, dass eine Eigenschaft des Datenverkehrs eine Sicherheitsbedrohung angibt, Erzeugen einer an ein oder mehrere Client-Vorrichtungen gerichteten Benachrichtigung durch das Sicherheitsmodul (402).

10. Verfahren nach Anspruch 9, wobei das Merkmal des Datenverkehrs, das die Sicherheitsbedrohung angibt, wenigstens ein Element einer Gruppe ist umfassend einen Typ eines im Datenverkehr vorhandenen Datenpakets, eine unzulässige Datenkommunikation zwischen Modulen, die mit der Gehäuse-Rückwandplatine (304) verbunden sind, eine unzulässige Erhöhung einer Geschwindigkeit des Datenverkehrs, eine unzulässige Bearbeitung eines auf dem Prozessormodul (206) des Industriesteuergeräts (118) installierten Steuerprogramms und ein unzulässiges Herunterladen eines neuen Steuerprogramms auf das Prozessormodul (206).

11. Verfahren nach Anspruch 9 oder 10, wobei:
das Erzeugen der Benachrichtigung das Erzeugen der Benachrichtigung als Reaktion auf das Bestimmen basierend auf der Sicherheitsüberwachung, dass der Datenverkehr eine definierte Sicherheitsregel verletzt, umfasst, und
die definierte Sicherheitsregel ein unzulässiges Muster des Datenverkehrs oder/und einen unzulässigen Typ von Datenpaket auf der Gehäuse-Rückwandplatine (304) festlegt.

12. Verfahren nach einem der Ansprüche 9 bis 11, ferner umfassend:
Lernen von Mustern des normalen Datenverkehrs basierend auf der Überwachung des Datenverkehrs im Laufe der Zeit durch das Sicherheitsmodul (402), und
Erzeugen der Benachrichtigung durch das Sicherheitsmodul (402) als Reaktion auf das Bestimmen nach dem Lernen der Muster des normalen Datenverkehrs, dass der Datenverkehr von den Mustern von normalem Datenverkehr abweicht, und/oder
wobei das Lernen das Lernen der Muster von normalem Datenverkehr als eine Funktion von wenigstens einem Element der Gruppe umfassend eine Tageszeit, einen Wochentag, eine Arbeitsschicht und einen Betriebsmodus einer Maschine, die vom Industriesteuergerät (118) überwacht und gesteuert wird, umfasst.

13. Verfahren nach einem der Ansprüche 9 bis 12, ferner umfassend:
Senden von Abfragen an mit der Gehäuse-Rückwandplatine (304) verbundene Vorrichtungen durch das Sicherheitsmodul (402) über die Gehäuse-Rückwandplatine (304), und
Erzeugen einer weiteren Benachrichtigung durch das Sicherheitsmodul (402) als Reaktion auf das Bestimmen, dass eine Antwort auf die von einer der Vorrichtungen empfangene Abfrage eine Sicherheitsbedrohung angibt; und/oder
wobei die Antwort auf die Abfrage wenigstens ein Element umfasst der Gruppe umfassend einen Wert eines Konfigurationsparameters der Vorrichtung, eine Angabe einer auf der Vorrichtung installierten Firmware-Version, eine Identität eines auf der Vorrichtung installierten Vertrauenszertifikats und einen eindeutigen Identifizierer der Vorrichtung.

14. Nichtflüchtiges, computerlesbares Medium, auf dem Anweisungen gespeichert sind, die als Reaktion auf das Ausführen ein Sicherheitsmodul (402), das einen Prozessor umfasst, veranlassen, Operationen auszuführen, wobei das Sicherheitsmodul (402) in einem Industriesteuergerät (118) angeordnet ist und über eine Gehäuse-Rückwandplatine (304) des Industriesteuergeräts (118) mit einem oder mehreren E/A-Modulen (204) und einem Prozessormodul (206) verbunden ist, wobei die Operationen umfassen:
Bilden einer Kommunikationsschnittstelle zwischen dem Sicherheitsmodul (402) und dem Prozessormodul (206) über die Gehäuse-Rückwandplatine (304) des Industriesteuergeräts (118), wobei die Gehäuse-Rückwandplatine (304) als ein Pfad für Datenverkehr zwischen dem Prozessormodul (206) und dem einen oder den mehreren E/A-Modulen (204) dient;
Durchführen einer Sicherheitsüberwachung von Datenverkehr über die Gehäuse-Rückwandplatine (304); und
als Reaktion auf das Bestimmen basierend auf der Sicherheitsüberwachung, dass ein Merkmal des Datenverkehrs ein Sicherheitsproblem angibt, Erzeugen einer an eine oder mehrere Client-Vorrichtungen gerichteten Benachrichtigung.

15. Nichtflüchtiges computerlesbares Medium nach Anspruch 14, wobei die Operationen ferner umfassen:
Senden von Abfragen über die Gehäuse-Rückwandplatine (304) an mit der Gehäuse-Rückwandplatine (304) verbundene Vorrichtungen und Erzeugen einer weiteren Benachrichtigung als Reaktion auf das Bestimmen, dass eine Reaktion auf die von einer Vorrichtung der Vorrichtungen empfangene Abfrage ein Sicherheitsproblem angibt.

## Revendications

1. Module de sécurité situé dans un contrôleur industriel (118) et connecté, *via* un fond de panier de châssis (304) du contrôleur industriel (118), à un ou plusieurs modules d'E/S (204) et à un module processeur (206) connectés au fond de panier de châssis (304), le module de sécurité comprenant :
une mémoire (422) qui stocke des composants exécutables ; et
un ou plusieurs processeurs (420), couplés de manière opérationnelle à la mémoire (422), qui exécutent les composants exécutables, les composants exécutables comprenant :
un composant d'interface de fond de panier (404) configuré pour relier le module de sécurité (402), *via* le fond de panier de châssis (304) du contrôleur industriel (118), au module processeur (206), dans lequel le fond de panier de châssis (304) sert de voie de circulation des données entre le module processeur (206) et les un ou plusieurs modules d'E/S (204) ; et
un composant de sécurité (406) configuré pour effectuer une surveillance de sécurité du trafic de données sur le fond de panier de châssis (304) et pour générer une notification en réponse à la détection, sur la base de ladite surveillance de sécurité, qu'une caractéristique du trafic de données est indicative d'une intrusion de sécurité.

2. Module de sécurité selon la revendication 1, dans lequel la caractéristique du trafic de données indiquant l'intrusion de sécurité est au moins l'un des éléments suivants : un type de paquet de données présent dans le trafic de données, une communication de données interdite entre des modules connectés au fond de panier, une augmentation interdite du débit du trafic de données, une modification interdite d'un programme de commande installé sur le module processeur (206) du contrôleur industriel (118), ou un téléchargement interdit d'un nouveau programme de commande vers le module processeur (206).

3. Module de sécurité selon la revendication 1 ou 2, comprenant en outre un composant d'interface client (408) configuré pour recevoir, depuis un dispositif client, des données de configuration définissant des règles de sécurité devant être appliquées par le composant de sécurité (406),
dans lequel les règles de sécurité définissent au moins l'un parmi des modèles interdits de trafic de données ou des types interdits de paquets de données sur le fond de panier de châssis (304) ; et/ou
dans lequel le composant de sécurité (406) est configuré pour générer la notification en réponse à la détermination, sur la base de la surveillance de sécurité, que le trafic de données enfreint une règle de sécurité parmi lesdites règles de sécurité.

4. Module de sécurité selon l'une des revendications 1 à 3, dans lequel le composant de sécurité (406) est configuré pour :
apprendre les modèles du trafic de données normal sur la base de la surveillance du trafic de données au fil du temps, et
générer la notification en réponse à la détermination, après avoir appris les modèles du trafic de données normal, que le trafic de données s'écarte des modèles du trafic de données normal ; et/ou
dans lequel le composant de sécurité (406) apprend les modèles du trafic de données normal en fonction d'au moins l'un parmi l'heure de la journée, le jour de la semaine, un quart de travail ou un mode de fonctionnement d'une machine qui est surveillée et commandée par le contrôleur industriel (118).

5. Module de sécurité selon l'une des revendications 1 à 4, en outre configuré pour envoyer, *via* le fond de panier de châssis (304), des requêtes aux dispositifs comprenant les un ou plusieurs modules d'E/S (204) du contrôleur industriel (118), et à générer une autre notification en réponse à la détermination qu'une réponse à la requête reçue d'un dispositif, parmi lesdits dispositifs, est indicative d'une intrusion de sécurité.

6. Module de sécurité selon la revendication 5, dans lequel les dispositifs connectés au fond de panier de châssis (304) comprennent en outre au moins l'un parmi un module de réseau, un module à fonction spéciale ou un module d'E/S distant ; ou
dans lequel la réponse à la requête comprend au moins l'un des éléments suivants : une valeur d'un paramètre de configuration du dispositif, une indication d'une version de micrologiciel installée sur le dispositif, l'identité d'un certificat de confiance installé sur le dispositif, ou un identifiant unique du dispositif.

7. Module de sécurité selon l'une des revendications 1 à 6, dans lequel le module de sécurité (402) est configuré pour surveiller le trafic de données chiffrées sur le fond de panier de châssis (304).

8. Module de sécurité selon l'une des revendications 1 à 7, dans lequel la notification comprend un résumé de l'intrusion de sécurité, et le résumé comprend au moins l'un des éléments suivants : un dispositif visé par l'intrusion de sécurité, un type d'intrusion de sécurité, une contre-mesure recommandée pour remédier à l'intrusion de sécurité, une identité du contrôleur industriel (118), ou une indication d'une zone de production dans laquelle l'intrusion de sécurité a été détectée.

9. Procédé de fonctionnement d'un module de sécurité situé dans un contrôleur industriel (118) et connecté, *via* un fond de panier de châssis (304) du contrôleur industriel (118), à un ou plusieurs modules d'E/S (204) et à un module processeur (206) connecté au fond de panier de châssis (304), le procédé comprenant :
l'interfaçage, par le module de sécurité (402), avec le module processeur (206), *via* le fond de panier de châssis (304) du contrôleur industriel (118) ;
la réalisation, par le module de sécurité (402), d'une surveillance de sécurité du trafic de données transitant par le fond de panier de châssis (304), dans lequel le fond de panier de châssis (304) sert de voie de circulation pour le trafic de données entre le module processeur (206) et les un ou plusieurs modules d'E/S (204) ; et
en réponse à la détermination, sur la base de la surveillance de sécurité, qu'une caractéristique du trafic de données est indicative d'une menace de sécurité, la génération, par le module de sécurité (402), d'une notification destinée à un ou plusieurs dispositifs clients.

10. Procédé selon la revendication 9, dans lequel la caractéristique du trafic de données indiquant la menace de sécurité est au moins l'un des éléments suivants : un type de paquet de données présent dans le trafic de données, une communication de données interdite entre des modules connectés au fond de panier de châssis (304), une augmentation interdite du débit du trafic de données, une modification interdite d'un programme de commande installé sur le module processeur (206) du contrôleur industriel (118), ou un téléchargement interdit d'un nouveau programme de commande vers le module processeur (206).

11. Procédé selon la revendication 9 ou 10, dans lequel :
la génération de la notification comprend la génération de la notification en réponse à la détermination, sur la base de la surveillance de sécurité, que le trafic de données enfreint une règle de sécurité définie, et
la règle de sécurité définie spécifie au moins l'un parmi un modèle interdit du trafic de données ou un type interdit de paquet de données sur le fond de panier de châssis (304).

12. Procédé selon l'une des revendications 9 à 11, comprenant en outre :
l'apprentissage, par le module de sécurité (402), de modèles du trafic de données normal sur la base de la surveillance du trafic de données au fil du temps, et
la génération, par le module de sécurité (402), la notification en réponse à la détermination, après l'apprentissage des modèles du trafic de données normal, que le trafic de données s'écarte des modèles du trafic de données normal ; et/ou
dans lequel l'apprentissage comprend l'apprentissage des modèles du trafic de données normal en fonction d'au moins l'un parmi une heure de la journée, un jour de la semaine, un quart de travail ou un mode de fonctionnement d'une machine qui est surveillée et commandée par le contrôleur industriel (118).

13. Procédé selon l'une des revendications 9 à 12, comprenant en outre :
l'envoi, par le module de sécurité (402) *via* le fond de panier de châssis (304), des requêtes aux dispositifs connectés au fond de panier de châssis (304), et
la génération, par le module de sécurité (402), d'une autre notification en réponse à la détermination qu'une réponse à la requête reçue de l'un parmi un dispositif, des dispositifs indique une menace pour la sécurité ; et/ou
dans lequel la réponse à la requête comprend au moins l'un des éléments suivants : une valeur d'un paramètre de configuration du dispositif, une indication d'une version de micrologiciel installée sur le dispositif, l'identité d'un certificat de confiance installé sur le dispositif, ou un identifiant unique du dispositif.

14. Support non transitoire lisible par ordinateur ayant des instructions stockées dessus qui, lorsqu'elles sont exécutées, amènent un module de sécurité (402) comprenant un processeur à effectuer des opérations, le module de sécurité (402) étant situé dans un contrôleur industriel (118) et connecté *via* un fond de panier de châssis (304) du contrôleur industriel (118) à un ou plusieurs modules d'E/S (204) et à un module processeur (206), les opérations comprenant :
l'interfaçage en communication du module de sécurité (402) avec le module processeur (206) *via* le fond de panier de châssis (304) du contrôleur industriel (118), dans lequel le fond de panier de châssis (304) sert de voie de circulation des données entre le module processeur (206) et les un ou plusieurs modules d'E/S (204) ;
effectuer une surveillance de sécurité du trafic de données transitant par le fond de panier de châssis (304) du châssis ; et
en réponse à la détermination, sur la base de la surveillance de sécurité, qu'une caractéristique du trafic de données est indicative d'un problème de sécurité, générer une notification destinée à un ou plusieurs dispositifs clients.

15. Support non transitoire lisible par ordinateur selon la revendication 14, les opérations comprenant en outre :
l'envoi, *via* le fond de panier de châssis (304), de requêtes aux dispositifs connectés au fond de panier de châssis (304), et la génération d'une autre notification en réponse à la détermination qu'une réponse à la requête reçue de l'un des dispositifs indique un problème de sécurité.
